# DEMANDE DE BREVET EUROPEEN

(11) **EP 2 544 108 A1**
(43) Date de publication de la demande: **09.01.2013**
(21) Numéro de dépôt: 12175294.3
(22) Date de dépôt: 06.07.2012
(51) Int. Cl.: G06F 17/30, G06F 17/24

(54) **Dispositif électronique pour l'annotation de document**

(30) Priorité: 06.07.2011 FR 1156112
(71) Demandeur: Myriad France, 73370 Le Bourget-du-lac (FR)
(72) Inventeur: Harper, Ross, Manchester, M15QE (GB); Nurse, Ed, Manchester, M20 2UX (GB); Howarth, Roy, Stalybridge, Cheshire SK15 3GE (GB)
(74) Mandataire: Domenego, Bertrand

(57) **Abrégé**

Le dispositif électronique (12) comporte des moyens d'injection dans un document d'une application (22) d'annotation pour étendre le document. L'application (22) d'annotation est propre à être exécutée depuis le document étendu seulement dans un contexte d'exécution d'un module (60) de gestion de rendu de document d'une application (56) de navigation sur des données source et traitées du module (60) de gestion de rendu de document et en utilisant les mêmes fonctions que le module (60) de gestion de rendu de document et en ce que le document traité par l'application (56) de navigation comprend des éléments graphiques, l'application (22) d'annotation étant adaptée pour ancrer une annotation (78) à un point d'un élément graphique du document indépendamment des coordonnées de l'élément graphique dans le document.

## Description

La présente invention concerne un dispositif électronique.

Plus précisément, l'invention concerne un dispositif électronique du type comportant une unité de traitement, des moyens d'affichage, une application de navigation, laquelle comprend un module de gestion de l'interface graphique d'accès à un réseau et un module de gestion de rendu de document définissant un contexte d'exécution du module de gestion de rendu, lequel contexte comprend les données source et traitées du module de gestion de rendu de document, et une application d'annotation propre à restituer et/ou ajouter des annotations sur un document traité par l'application de navigation en vue de l'affichage d'une représentation du document annoté.

Un tel dispositif permet à un utilisateur d'ajouter des annotations personnalisées à un document, par exemple un document Web, un fichier PDF, etc. et de visualiser des annotations ajoutées par un autre utilisateur sur ce document depuis un dispositif informatique, par exemple un ordinateur ou un téléphone portable.

Une annotation est un élément graphique associé à un document et comprend du contenu non-natif du document renseigné par un utilisateur. De telles annotations permettent ainsi aux utilisateurs d'échanger des informations, des suggestions, des impressions, etc. relatives à un document via le document lui-même, plutôt que via un système de messagerie par exemple.

Ces annotations prennent par exemple la forme d'une note, d'un lien ou d'une image pointant vers un élément du document auquel elle se réfère.

L'application d'annotation est de façon classique implémentée sous la forme d'un « plug-in » d'une application de navigation, c'est-à-dire d'une extension dépendante de l'application de navigation sur le document. Elle interagit alors avec l'application de navigation et affiche les annotations générées ou restituées sur la représentation du document que l'application de navigation génère.

Une telle application est par exemple décrite dans US 2011/0066957 A1.

Dans ce document, l'application d'annotation est une extension de l'application de navigation installée sur le dispositif informatique. L'application de navigation réalise alors l'affichage d'une barre d'outils adaptés à la création et au positionnement d'annotations sur le document visualisé. Les annotations générées ou restituées ainsi que la barre d'outils sont superposées par l'extension à la représentation du document générée par l'application de navigation.

Un tel procédé ne donne pas entière satisfaction. En effet, l'application d'annotation est une dépendance de l'application de navigation et doit donc être compatible avec l'application de navigation pour fonctionner. Un utilisateur d'une deuxième application de navigation ne peut donc pas visualiser des annotations générées via une première application de navigation différente ou créer des annotations visualisables via une autre application de navigation sans recours à une extension, laquelle doit être spécifiquement développée pour la deuxième application de navigation.

Un but de l'invention est donc d'obtenir un procédé d'annotation dont l'application de mise en oeuvre est adaptée à toutes les applications de navigation.

A cet effet, l'invention a pour objet un dispositif électronique du type précité, **caractérisé en ce qu'**il comporte des moyens d'injection dans le document de ladite application d'annotation pour étendre le document et l'application d'annotation est propre à être exécutée depuis le document étendu seulement dans le contexte d'exécution du module de gestion de rendu de document sur les données source et traitées du module de gestion de rendu de document et en utilisant les mêmes fonctions que le module de gestion de rendu et en ce que le document traité par l'application comprend des éléments graphiques, l'application étant adaptée pour ancrer une annotation à un point d'un élément graphique du document indépendamment des coordonnées de l'élément graphique dans le document

Le dispositif selon l'invention peut comprendre l'une ou l'autre des caractéristiques suivantes, prise(s) isolément ou suivant toute combinaison techniquement possible :
- il comporte des moyens de téléchargement depuis un serveur dédié de l'application,
- l'application de navigation comprend des moyens de déclenchement de l'injection de l'application d'annotation sur le dispositif électronique,
- l'application de navigation comprend des moyens de création de marque-pages scriptés personnalisables, les moyens d'injection de l'application d'annotation comprenant l'actionnement d'un marque-page scripté,
- le document est un fichier HTML, et
- le module de gestion de rendu de la ou les applications de navigation comprennent des moyens pour générer la représentation du document annoté à partir de représentations DOM du document.

L'invention sera mieux comprise à la lecture de la description qui va suivre, donnée uniquement à titre d'exemple, et faite en se référant aux dessins annexés, sur lesquels :

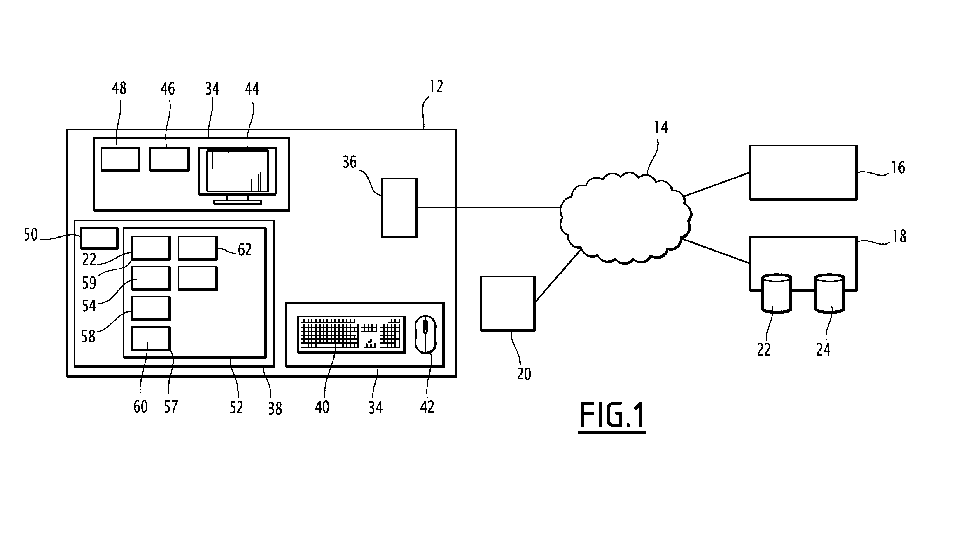

- la Figure 1 est une représentation schématique d'un système global comprenant un dispositif électronique adapté pour la mise en oeuvre du procédé selon l'invention,
- la Figure 2 est une représentation schématique d'une représentation cible d'un document Web via une application de navigation exécutée par un dispositif selon l'invention,
- la Figure 3 est une représentation schématique d'une représentation source du même document que la Figure 2, et
- la Figure 4 est un organigramme d'un procédé selon l'invention.

Le système global 10 comprend un dispositif électronique 12 adapté pour interagir avec un réseau 14 afin d'établir une communication avec au moins un serveur Web 16, un serveur 18 dédié à l'application de mise en oeuvre du procédé selon l'invention, et un autre dispositif informatique 20.

De manière connue, le serveur Web 16 est adapté pour stocker des documents, par exemple des pages HTML, du contenu multimédia, etc. Le serveur est également adapté pour traiter une requête qu'il reçoit en provenance d'un dispositif électronique 12 ou 20. De façon classique, le traitement de la requête par le serveur 16 a pour effet l'envoi par celui-ci d'un document qu'il contient à destination du dispositif dont provient la requête.

Le serveur 18 est adapté pour stocker une application d'annotation 22 et des données d'annotations 24 générées par l'application d'annotation 22 lors de son fonctionnement, comme on le verra par la suite.

Le dispositif électronique 12 est formé par exemple d'un ordinateur personnel, d'un téléphone portable ou d'une tablette à écran tactile. Il comprend des moyens 32 de saisie d'informations générées par un utilisateur, des moyens 34 de visualisation, des moyens 36 de communication avec un autre dispositif électronique distant, et une unité centrale 38 de traitement adaptée pour exécuter des applications nécessaires au fonctionnement du dispositif électronique 12.

De façon connue, les moyens de saisie 32 comprennent un clavier 40 à partir duquel l'utilisateur peut instruire l'exécution de logiciels, de fonctionnalités de ces logiciels, ajouter du texte à un document, etc. Les moyens 32 de saisie comprennent aussi des moyens d'interaction avec une information affichée sur les moyens de visualisation 34, comme par exemple une souris 42.

Les moyens de visualisation 34 comprennent de façon connue un écran 44 et des moyens de traitement de l'information graphique, par exemple un processeur graphique 46 et une mémoire graphique 48 associée.

Le processeur graphique 46 est adapté pour traiter l'information graphique stockée dans la mémoire graphique 48 et réaliser l'affichage sur l'écran 44 de cette information ou d'une représentation de celle-ci.

De façon avantageuse, les moyens de saisie 32 et les moyens de visualisation 34 peuvent présenter une forme commune, dans le cas d'un écran tactile par exemple.

Les moyens de communication 36 comprennent une interface réseau permettant au dispositif informatique 12 de communiquer avec les autres dispositifs du réseau 14.

L'unité centrale 38 de traitement comprend un processeur 50 et une ou plusieurs mémoires 52.

Le processeur 50 est adapté pour exécuter des applications contenues en mémoire 52, notamment un système d'exploitation permettant le fonctionnement classique d'un dispositif électronique.

La mémoire 50 comprend différentes zones de mémoire, allouées statiquement ou dynamiquement, qui contiennent des applications destinées à être exécutées par le dispositif informatique 12.

La mémoire 50 comprend ainsi au moins une application 54 d'envoi de requête, trois modules d'une application de navigation 56, une zone de mémoire 57 étant allouée à un module 60 de gestion de rendu de l'application de navigation, comme on le verra par la suite, et une zone mémoire 59 allouée à l'application 22 de mise en oeuvre du procédé 23 selon l'invention.

L'application 54 d'envoi de requête a pour fonction d'instruire au dispositif informatique 12 l'envoi d'une requête à destination d'un dispositif distant via ses moyens de communication 36.

Lorsque l'application 54 d'envoi de requête est exécutée par le dispositif 12, une connexion au réseau est effectuée via un protocole de communication, par exemple le protocole http (HyperText Transfert Protocol) ou UMTS (Universal Mobile Télécommunications System) dans le cas d'un téléphone, et une requête, par exemple une requête http, est envoyée à travers le réseau 14 au dit dispositif.

De manière connue, lorsque le dispositif distant est un serveur Web et que la requête est une requête http contenant l'adresse dite URL (Universal Ressource Locator) d'une ressource stockée sur le dispositif distant, par exemple une page Web, le serveur Web retourne la ressource demandée au dispositif électronique 12.

L'application 54 d'envoi de requête est en outre adaptée à l'envoi de requêtes à destination du serveur 18 dédié. La réception d'une requête par le serveur 18 dédié déclenche l'envoi de l'application 22 d'annotation elle-même à destination du dispositif informatique 12, comme on le verra par la suite.

L'application de navigation 56 a pour fonction de permettre à l'utilisateur d'accéder à un contenu, par exemple un document Web, de le visualiser sur les moyens de visualisation 34 et d'interagir avec ce contenu, notamment via une interface graphique 64 que comprend l'application 56.

De manière connue, une application de navigation comprend au moins un module 58 de gestion d'une interface graphique d'accès à un réseau, un module 60 de gestion de rendu et un module 62 de gestion d'extensions.

Ces modules correspondent à des sous-ensembles logiciels de l'application de navigation 56 qui implémentent les fonctions qui les composent.

Le module 58 de gestion d'interface a pour fonction de piloter les éléments de l'interface graphique 64 de l'application et d'assurer la connexion au réseau pour requérir et recevoir une page Web notamment.

De façon connue, ces éléments peuvent comprendre des boutons 66 de défilement entre les documents visualisés, une barre 68 de navigation, une barre de menu déroulant 70. L'utilisateur interagit alors avec ces éléments via les moyens de saisie 32.

Le module 60 de gestion de rendu a pour fonction de piloter l'ensemble des fonctionnalités associées au traitement des documents et d'en réaliser l'affichage sur les moyens de visualisation 34.

De manière connue, ce module 60 a pour fonction de générer une représentation du document, d'ajouter des éléments graphiques au document visualisé, d'exécuter le contenu multimédia du document, d'exécuter les « scripts » s'y trouvant et d'interagir avec les actions de l'utilisateur.

Lors du fonctionnement de l'application 56 de navigation, la réception d'éléments associés à une page Web que l'utilisateur souhaite consulter déclenche leur traitement par l'unité centrale 38 et leur envoi vers le module 60 de gestion de rendu. Celui-ci réalise alors la construction d'une représentation du document qui est ensuite sauvegardée dans la mémoire 46 des moyens 34 de visualisation, puis affichée sur l'écran 44.

Ce module 60 de gestion de rendu correspond au coeur du navigateur et repose sur l'utilisation de langages et de technologies standard recommandées par le W3C (World Wide Web Consortium). Ces technologies comprennent par exemple le HTML, le CSS (Cascading Style Sheet), et le Javascript, qui est un langage de manipulation d'objets fournis par une application, telle l'application 56 de navigation.

De fait, les modules de gestion de rendu de différentes applications de navigation présentent des fonctionnalités communes reposant sur l'utilisation de ces standards.

Ainsi une application pilotée par le module de gestion d'une application de navigation est adaptable à différentes applications de navigation.

Le module 62 de gestion d'extension a pour fonction de piloter des extensions dépendantes de l'application 56, et notamment de transmettre à ces extensions les informations dont elles ont besoin pour fonctionner.

De manière connue, ces extensions ou « plug-ins » permettent d'ajouter de nouvelles fonctionnalités à l'application 56 de navigation sans avoir à modifier celle-ci. Elles permettent notamment la prise en charge par l'application 56 de navigation de types de fichiers non standard, tels le Flash par exemple.

Ces extensions étant dépendantes de l'application 56 de navigation pour fonctionner, elles ne sont pas transposables d'une application de navigation donnée à une application de navigation différente. L'extension qui implémente une fonctionnalité donnée doit ainsi être spécifiquement adaptée à l'application de navigation dont elle dépend.

De manière connue, un document Web est construit à partir d'un langage de balisage, par exemple le Hypertext Markup Language ou HTML. D'autres langages et technologies couramment utilisées pour la construction d'un tel document sont le Extensible Markup Language, ou XML, le JavaScript, le Cascading Style Sheet (CSS), etc.

Le langage de balisage permet à un développeur, un créateur de contenu, etc. de construire un document en y ajoutant des éléments balisés sémantiquement. Les balises sont ensuite traitées par le module de gestion de rendu qui génère une représentation logique du document à partir de celles-ci avec laquelle les modules de l'application interagissent.

Dans un dispositif selon l'invention, le module 60 de gestion de rendu implémente les représentations logiques de type Document Object Model (DOM). Une représentation DOM d'un document définit la structure logique du document sous forme arborescente. Chaque noeud de l'arborescence correspond à un élément du document structuré, par exemple une image, un bloc de texte, un lien, etc.

Chaque noeud comprend des noeuds dits « fils » situés à un rang en dessous dans l'arborescence. Chacun des fils de ce noeud correspond à une portion logique du document de granularité supérieure à ce noeud, c'est-à-dire de plus grand détail.

Ainsi, le noeud de premier rang de la représentation DOM correspond au document en entier, ses fils correspondent aux portions logiques principales du document, leur fils à des portions logiques de ces portions logiques principales, etc.

Dans ce qui suit, les données « traitées » par le module 60 correspondent à la représentation DOM du document à partir de laquelle est créée une représentation affichée sur les moyens de visualisation 44. Les données dites « sources » du module 60 correspondent aux données -par exemple le code HTML- du document nécessaires au module 60 pour en réaliser la représentation DOM.

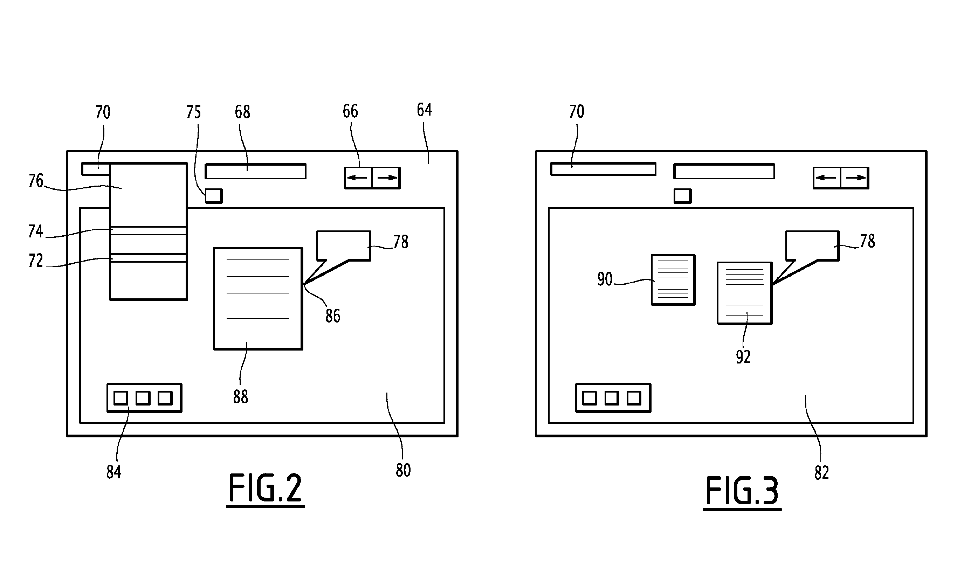

L'application 56 de navigation comprend en outre plusieurs fonctionnalités illustrées sur la Figure 3.

De manière connue, l'une de ces fonctionnalités permet à l'utilisateur de saisir dans le navigateur via une barre de navigation 68 l'adresse URL d'une ressource à laquelle il souhaite accéder.

L'application 56 de navigation est également adaptée pour permettre à l'utilisateur de générer des marque-pages 72 lui permettant d'accéder rapidement à une ressource donnée.

Cette fonctionnalité est pilotée par le module 58 de gestion d'interface et est par exemple implémentée sous la forme d'un bouton 75 dédié et d'onglets dans un menu déroulant 76 de l'application.

De manière connue, lorsque l'utilisateur souhaite créer un marque-page 72 associé à une ressource spécifique, il « clique » via la souris sur le bouton 75 de raccourci. Le module 58 de gestion d'interface ordonne à l'unité centrale 38 de traitement l'exécution d'une commande qui a pour résultat la création d'un marque-page 72 accessible ultérieurement via un onglet dans le menu déroulant 76.

Lorsque l'utilisateur souhaite accéder à une ressource à laquelle est associé un marque-page 72, il clique via la souris sur l'onglet correspondant dans le menu déroulant 76. Le navigateur exécute alors une commande ayant pour résultat l'envoi d'une requête par le dispositif informatique 12 à un serveur distant sur lequel est stockée la ressource correspondant au marque-page 72.

De manière classique, ces marque-pages 72 peuvent être remplacés par des marque-pages « scriptés » 74.

La fonction d'un marque-page scripté 74 est de permettre, outre l'accès à une ressource distante, l'exécution d'un script, par exemple un Javascript, qui est contenu dans le marque-page scripté. Ainsi, une fonctionnalité plus riche que le simple accès à la ressource peut être associée à un marque-page 72 via un marque-page scripté 74 qui le remplace dans le menu déroulant 76. De manière connue, ces marque-pages scriptés 74 permettent la modification du document visualisé, la consultation d'un moteur de recherche, l'exécution d'une requête particulière, etc.

L'application d'annotation 22 est propre à être mise en oeuvre par le dispositif électronique 18 après avoir été « injectée » dans le document. L'injection est réalisée de la manière suivante : le marque page scripté créé un élément <script> dans le document par le biais de la fonction Javascript standard document.createElement('script'), puis assigne la source de ce script à un fichier Javascript situé sur le serveur 18 en modifiant l'attribut src de l'élément <script> préalablement créé. Enfin, l'élément <script> est ajouté dans le document par le biais de la fonction JavaScript standard document.body.appendChild(s), où s est l'élément <script> préalablement créé, ce qui a pour effet de déclencher l'injection puis l'exécution du fichier Javascript pointé par s.

En informatique, on désigne par injection d'une application à un document l'ajout du code et des fonctions qui constituent l'application au document.

En pratique, l'application 22 implémente du code comprenant des fonctions et des scripts en langages HTML, CSS et Javascript, comme on le verra par la suite.

Lors de l'injection de l'application 22 dans le document, ces fonctions et ces scripts sont ajoutés à ceux qui composent le document lui-même.

L'application 22 réalise ainsi une extension du document.

Cette application 22 d'annotation a pour fonction de permettre à un utilisateur d'ajouter et de visualiser des annotations 78 sur un document. Ces annotations 78 peuvent avoir été générées par lui ou par un autre utilisateur sur une autre représentation du document. Cette représentation peut par exemple avoir elle-même été générée depuis un autre dispositif informatique 20.

Plus particulièrement, l'application d'annotation 22 est adaptée pour restituer une annotation ajoutée à une représentation 80 (c'est-à-dire au rendu du document généré par le module 60 de gestion de rendu à partir de la représentation DOM du document avec laquelle le module 60 de gestion de rendu interagit) dite « source » d'un document sur une représentation 82 dite « cible » du même document. Deux représentations d'un même document peuvent varier sensiblement l'une de l'autre du fait des différences entre les moyens de visualisation utilisés, les tailles des fenêtres de visualisation, des tailles des polices utilisées, des niveaux de zoom utilisés, etc.

L'application 22 est également adaptée pour communiquer avec le serveur 18 dédié via les moyens 36 de communication de l'ordinateur 12 afin d'obtenir les informations dont elle a besoin pour fonctionner, comme on le verra par la suite.

L'application 22 comprend une fonctionnalité de création d'annotation 78 sur une représentation d'un document et une fonctionnalité de restitution d'une annotation associée à un document.

La fonctionnalité de création d'annotation 78 permet à un utilisateur de créer une annotation 78 personnalisée, par exemple une image, un bloc de texte, du texte libre, etc. et de l'associer à un élément graphique que comprend le document.

A cet effet, l'application 22 d'annotation permet à l'utilisateur de sélectionner le type de l'annotation 78 qu'il souhaite ajouter, le contenu de l'annotation, un élément dit « source » de la représentation auquel l'annotation est associée, la position de l'annotation relativement à cet élément source, etc.

Ces fonctions sont implémentées par une barre 84 d'outils générée uniquement par le module 60 de gestion de rendu avec lesquels l'utilisateur peut interagir. Cette barre 84 d'outils permet à l'utilisateur de sélectionner un élément d'annotation (par exemple, une boîte de texte, une image, un dessin à main levée), d'en modifier certains attributs (par exemple la couleur ou la tailler) puis de positionner l'élément sur la page web.

L'application 22 ne fait usage que de fonctions présentes dans le module de gestion de rendu 60 en utilisant les technologies HTML, CSS, Javascript. HTML et CSS sont utilisés pour implémenter le visuel de l'application d'annotation, et le Javascript est utilisé pour implémenter la communication avec le serveur 18 ainsi que la logique de l'application, c'est à dire la manière dont l'application 22 réagit aux actions de l'utilisateur.

En outre, l'application 22 d'annotation est exécutée dans le « contexte » du module 60 de gestion de rendu, et n'interagit qu'avec lui pour générer ou restituer des annotations 78 sur les documents.

En informatique, on définit le « contexte » d'une application comme l'ensemble des ressources minimales nécessaires au processeur pour interrompre l'exécution de l'application et reprendre l'exécution de l'application au point où celle-ci a été interrompue.

De manière connue, ces ressources comprennent des registres dits « généraux » et des registres dits « d'état » que le processeur de l'unité centrale utilise pour exécuter l'application ainsi que la zone de la mémoire utilisée par l'application.

Une application qui fonctionne dans le contexte d'une autre a ainsi accès à toutes ses fonctionnalités et données sans restriction.

Ainsi, l'application 22 d'annotation ne traite que des données contenues dans les registres propres du module 60 et avec des fonctions propres du module 60 de rendu, sans avoir recours à d'autres données ou fonctions de l'application de navigation 56 extérieures au module 60.

Dans un premier temps, l'utilisateur sélectionne le type de l'annotation 78 qu'il veut ajouter parmi plusieurs types. Ces types correspondent ainsi à une image, telle une binette (« smiley ») ou une flèche, un champ de texte, du texte libre, etc.

En fonction du type de l'annotation créée, l'application 22 d'annotation définit un point d'ancrage 86 associé à l'annotation 78. Par exemple, le point d'ancrage 86 d'une image est le centre de l'image sauf si cette image représente une flèche, auquel cas le point d'ancrage défini sera l'extrémité de la pointe de la flèche. En outre, le point d'ancrage d'un texte libre est défini comme étant le premier point du premier trait effectué par l'utilisateur via les moyens de saisie.

Pour chaque annotation, les coordonnées (X, Y) de son point d'ancrage sont déterminées relativement au coin supérieur gauche de la page.

Via l'exécution de la routine standard JavaScript DOM document.elementfromPoint(), l'application 22 extrait les valeurs de paramètres de l'élément 88 dit « source » (c'est-à-dire du noeud correspondant de la représentation DOM à partir de laquelle est générée la représentation source 80) de la représentation source 80 qui comprend le point de coordonnées (X, Y) auquel l'annotation 78 est alors associée.

Ces paramètres - qui comprennent entre autre le décalage en coordonnées entre le point d'ancrage 86 de l'annotation 78 et l'élément 88 - présentent des degrés d'importance distincts.

Les paramètres dits essentiels comprennent le type de l'élément (image, texte, etc.).

Les paramètres dits de haute importance comprennent une donnée ID d'identification, une donnée de source de l'élément 88 source -par exemple son URL- et le contenu textuel HTML de l'élément - lorsque l'élément 88 source est un paragraphe par exemple-.

Les paramètres de faible importance comprennent les coordonnées de l'élément source 88 relatives au coin supérieur gauche de la page.

Les valeurs de ces paramètres sont stockées, ainsi que des informations d'identification du document auquel l'annotation est rattachée. L'ensemble de ces informations définit les informations d'annotation 24.

Ces informations d'annotation 24 générées par l'application 22 lors de la création de l'annotation 78 sont alors communiquées au serveur dédié 18 qui les stocke.

Ces données 24 sont ensuite nécessaires à l'application 22 d'annotation pour la restitution d'annotations 78 associées à un document visualisé sur un dispositif 12 selon l'invention.

A cet effet, l'application exécute la routine Javascript DOM document.getElementsByTagName() à partir de la valeur du type de l'élément source, qui retourne un tableau des éléments 90 candidats ayant pour type le type de l'élément source 88 auquel l'annotation 78 est associée. Ce tableau est alors stocké en mémoire.

A partir de ce tableau, un sous-tableau d'éléments candidats 90 est généré par l'application 22 à partir des éléments candidats 90 dont l'une au moins des valeurs des paramètres de haute importance est égale à celle du paramètre correspondant de l'élément source 88.

En pratique, la comparaison des propriétés des éléments est effectuée à partir d'un condensat (« hash ») des propriétés. Pour des raisons de coût de calcul, ce condensat ne comprend qu'une partie de la valeur de ces propriétés, par exemple les 32 caractères initiaux ou finaux de celles-ci.

Si un seul élément candidat 90 correspond, celui-ci est sélectionné comme élément cible 92 de l'annotation correspondante.

Si plus de deux éléments correspondent, les coordonnées des éléments candidats 90 sont comparées. Celui dont les coordonnées dans la représentation cible 82 sont les plus proches des coordonnées de l'élément source 88 dans la représentation source 80 est sélectionné.

Si aucun élément ne correspond, la comparaison précédente est réitérée à partir du tableau de tous les éléments candidats 90.

Si l'application 22 d'annotation n'identifie toujours pas d'élément cible 92, les coordonnées du point d'ancrage 86 de l'annotation 78 dans la représentation source 80 sont utilisées pour repositionner l'annotation 78 sur la représentation cible 82.

En pratique, une fois un élément cible 92 identifié, l'application 22 d'annotation obtient ses coordonnées et positionne l'annotation 78 relativement à cet élément cible 92 en faisant correspondre cette position relative avec la position de l'annotation 78 relativement à l'élément source 88.

L'application 22 modifie alors la représentation DOM générée par le module 60 de gestion de rendu qui réalise alors l'affichage de l'annotation 78 directement sur la représentation 82 du document qu'il génère sur les moyens de visualisation 34.

L'application 22 procède ainsi en ancrant une annotation 78 nouvellement créée à un élément du document considéré.

Dans le dispositif 12 selon l'invention, l'application 22 d'annotation n'a pas besoin d'être installée préalablement à son utilisation.

Lorsque l'utilisateur de l'application 22 d'annotation souhaite ajouter une annotation 78 à un document, il implémente l'application 22 via un marque-page scripté 78 de son application 56 de navigation. L'application 22 est alors téléchargée par le serveur dédié 18 sur le dispositif informatique 12 puis injectée dans le document.

Dans un mode de réalisation, le marque-page scripté 74 est généré automatiquement par le serveur dédié 18 lorsque l'utilisateur s'y enregistre pour pouvoir utiliser l'application 22. Le marque-page scripté 74 est inséré dans une page web présentée à l'utilisateur par le serveur 18 comme un URL ayant un attribut texte ou image invitant l'utilisateur à mémoriser cet URL comme marque-page.

Un tel procédé de déploiement de l'application 22 sur un dispositif électronique est adapté à tous les dispositifs dont la ou les applications de navigation disposent d'un module de gestion de rendu.

De par les technologies standard - HTML, CSS, Javascript, etc. - que l'application 22 exploite pour fonctionner et du fait qu'elle est injectée dans le document web, elle ne requiert en outre aucune modification de l'application de navigation 56 pour fonctionner, et ne repose sur aucune technologie propriétaire d'une application de navigation 56 donnée, comme c'est le cas pour un « plug-in ».

L'application d'annotation 22 qui est donc adaptée pour permettre à l'utilisateur d'ajouter et de visualiser des annotations sur des documents via toutes les applications de navigation, notamment les applications de navigation implémentées sur les téléphones portables.

Par ailleurs, le stockage de l'application 22 sur le serveur dédié facilite sa mise à jour, par exemple lors d'une modification du procédé d'annotation qu'elle implémente.

En effet, seule la mise à jour de l'application 22 se trouvant sur le serveur 18 dédié est alors nécessaire.

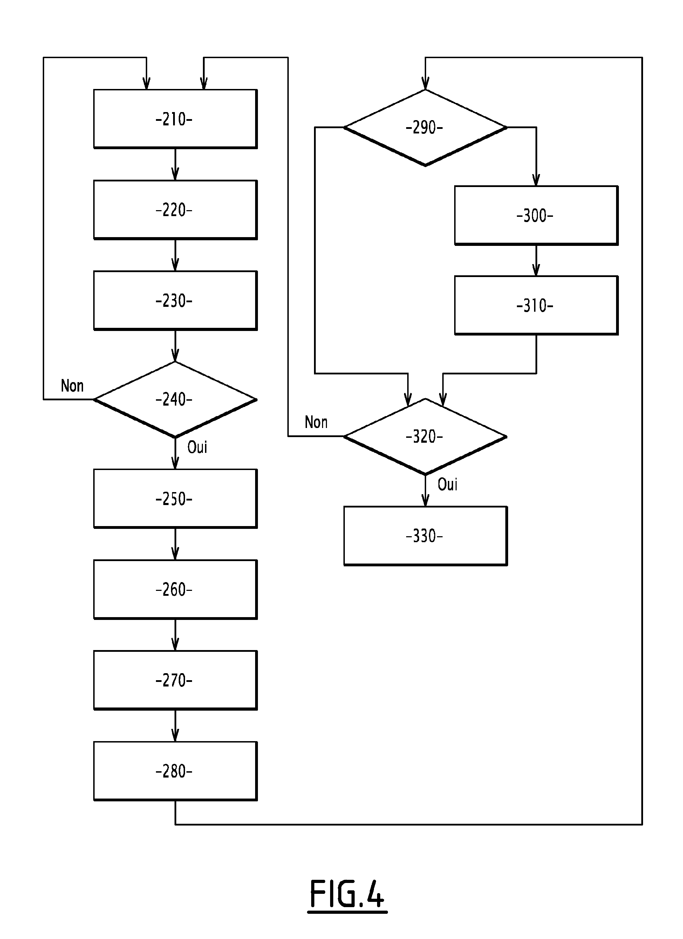

En référence à la Figure 4, le procédé selon l'invention va maintenant être décrit de façon détaillée.

Lors d'une étape 210, l'utilisateur saisit dans la barre 68 de navigation l'adresse URL d'un document Web qu'il souhaite consulter grâce au clavier 32. L'application de navigation 56 commande à l'unité de traitement 38 l'exécution de l'application 54 de requête. L'application 54 de requête génère une requête émise via les moyens de communication 36 à destination du serveur Web 16 sur lequel est stocké le document.

A l'issue de cette étape 210, le serveur web 16 reçoit la requête émise par le dispositif informatique 12.

Lors d'une étape 220, le serveur Web 16 retourne le contenu du document.

A l'issue de cette étape 220, le dispositif informatique 12 reçoit le contenu du document par ses moyens de communication 36. Le document est alors transmis au module 60 de gestion de rendu de l'application 56 de navigation.

Lors d'une étape 230, le module 60 de gestion de rendu construit une représentation DOM du document et réalise l'affichage de la représentation 82 sur l'écran 44.

Lors d'une étape 240, l'utilisateur interagit avec le système de marque-pages 72 du navigateur. Celui-ci actionne le marque-page scripté 74.

Lors d'une étape 250, la requête associée au marque-page scripté 74 est envoyée par l'application 54 d'envoi de requête via les moyens 36 de communication à destination du serveur dédié 18.

A l'issue de cette étape 250, le serveur dédié 18 reçoit la requête qui lui est destinée.

Au cours d'une étape 260, le serveur 18 dédié à l'application 22 déploie l'application d'annotation 22 sur le dispositif informatique 12.

A l'issue de cette étape 260, l'application 22 reçue est installée dans la zone de mémoire 57 qui lui est allouée et devient apte à être exécutée.

Lors d'une étape 270, l'application d'annotation 22 commande l'exécution de l'application 54 d'envoi de requête par l'unité centrale 38. Le dispositif informatique 12 envoie alors une nouvelle requête à destination du serveur dédié 18 via ses moyens 36 de communication.

A l'issue de cette étape 270, le serveur dédié 18 reçoit la requête.

Lors d'une étape 280, le serveur dédié 18 transmet au dispositif informatique 12 les informations d'annotation 24 associées au document.

Lors d'une étape 290, l'unité centrale 38 traite les informations 24 reçues et l'application d'annotation 22 détermine si des annotations 78 associées au document sont à restituer sur la représentation 82 du document.

Lors d'une étape 300, l'application 22 d'annotation identifie chacun des éléments cibles 92 de la représentation cible 82 auxquels sont associées des annotations 78, comme décrit ci-dessus. Cette identification est réalisée par le biais de fonctions JavaScript standard telles que document.elementFromPoint() et par les attributs standards des éléments HTML tels que HTMLEIementObject.tagName, HTMLElementObject.innerHTML, HTMLEIementObject.id, imageObject.src, où HTMLElementObject représente un élément cible et imageObject un élément cible qui est une image.

Lors d'une étape 310, l'application d'annotation 22 restitue les annotations 78 via le module 60 de gestion de rendu de l'application 56 de navigation sur la représentation cible 82 générée par le module 60 à partir de la représentation DOM. Cette restitution est réalisée par le biais de fonctions JavaScript standard telles que document.getElementsByTagName() et par les attributs standards des éléments HTML tels que HTMLEIementObject.innerHTML, HTMLElementObject.id, imageObject.src, où HTMLElementObject représente un élément cible et imageObject un élément cible qui est une image

Lors d'une étape 320, l'utilisateur peut ou non procéder à la création d'une annotation 78. Si tel est le cas, l'utilisateur définit via l'application 22 la ou les annotations 78 qu'il ajoute à la représentation cible 82 du document comme décrit ci-dessus. Les informations d'annotation 24 générées par la création d'une ou plusieurs annotation(s) 78 sont stockées en mémoire 52.

A l'issue de l'étape 320, les annotations 78 sont affichées sur la représentation cible 82 générée par le module 60 de gestion de rendu.

Au cours d'une étape 330, l'application d'annotation 22 transmet via les moyens 36 de communication les informations d'annotation 24 générées lors de l'étape 320 à destination du serveur dédié 18. Celui-ci les stocke ensuite dans ses moyens de stockage pour envoi ultérieur à destination d'un dispositif informatique 12 ou 20 selon l'invention depuis lequel un utilisateur souhaite consulter les annotations 78 ajoutées au document.

## Revendications

1. Dispositif électronique (12) du type comportant :
- une unité de traitement (18),
- des moyens d'affichage (34),
- une application (56) de navigation, laquelle comprend :
- un module (58) de gestion de l'interface graphique d'accès à un réseau (14),
- un module (60) de gestion de rendu de document définissant un contexte d'exécution du module (60) de gestion de rendu de document, lequel contexte comprend les données source et traitées du module (60) de gestion de rendu de document,
- une application (22) d'annotation propre à restituer et/ou ajouter des annotations (78) sur un document traité par l'application (56) de navigation en vue de l'affichage d'une représentation du document annoté (80,82),
**caractérisé en ce qu'**il comporte des moyens d'injection dans le document de ladite application (22) d'annotation pour étendre le document, et l'application (22) d'annotation est propre à être exécutée depuis le document étendu seulement dans le contexte d'exécution du module (60) de gestion de rendu de document sur les données source et traitées du module (60) de gestion de rendu de document et en utilisant les mêmes fonctions que le module (60) de gestion de rendu de document et **en ce que** le document traité par l'application (56) de navigation comprend des éléments graphiques, l'application (22) d'annotation étant adaptée pour ancrer une annotation (78) à un point d'un élément graphique du document indépendamment des coordonnées de l'élément graphique dans le document.

2. Dispositif électronique (12) selon la revendication 1, **caractérisé en ce qu'**il comporte des moyens de téléchargement depuis un serveur dédié de l'application (22).

3. Dispositif électronique (12) selon la revendication 1 ou 2, **caractérisé en ce que** l'application de navigation (56) comprend des moyens de déclenchement de l'injection de l'application (22) d'annotation sur le dispositif électronique (12).

4. Dispositif électronique (12) selon la revendication 3, **caractérisé en ce que** l'application (56) de navigation comprend des moyens de création de marque-pages scriptés (74) personnalisables, les moyens d'injection de l'application d'annotation (22) comprenant l'actionnement d'un marque-page scripté (74).

5. Dispositif électronique (12) selon l'une quelconque des revendications précédentes, **caractérisé en ce que** le document est un fichier HTML.

6. Dispositif électronique (12) selon l'une quelconque des revendications précédentes, **caractérisé en ce que** le module (60) de gestion de rendu de la ou les applications de navigation comprennent des moyens pour générer la représentation (80,82) du document annoté à partir de représentations DOM du document.
